# EUROPEAN PATENT SPECIFICATION

(11) **EP 2 133 874 B1**
(45) Date of publication and mention of the grant of the patent: **14.12.2011**
(21) Application number: 07740556.1
(22) Date of filing: 30.03.2007
(51) Int. Cl.: G11B 7/007, G06Q 30/00, G11B 7/004, G11B 7/0045, G11B 19/02, G11B 20/10

(54) **INFORMATION RECORDING MEDIUM AND ADVERTISEMENT INFORMATION DISTRIBUTING SYSTEM**
INFORMATIONSAUFZEICHNUNGSMEDIUM UND WERBEINFORMATIONS- VERTEILUNGSSYSTEM
SUPPORT D'ENREGISTREMENT D'INFORMATION ET SYSTÈME DE DISTRIBUTION D'INFORMATION DE PUBLICITÉ

(43) Date of publication of application: 16.12.2009
(73) Proprietor: Pioneer Corporation, Kanagawa 212-0031 (JP)
(72) Inventor: KURODA, Kazuo, Kawasaki-shi, Kanagawa-ken, 212-0031 (JP); MURAMATSU, Eiji, Kawasaki-shi, Kanagawa-ken, 212-0031 (JP); TAKISHITA, Toshihiko, Yamanashi-ken, 400-0053 (JP)
(74) Representative: Viering, Jentschura & Partner
(86) International application number: PCT/JP2007/057120
(87) International publication number: WO 2008/126258

(56) References cited:
- JP-A- 11 039 725
- JP-A- 2003 123 384
- JP-A- 2003 203 424
- JP-A- 2006 155 723
- US-A1- 2005 007 920
- US-B1- 6 654 547

## Description

### Technical Field

The present invention relates to an information recording medium, such as a DVD, on which data information can be recorded, and an advertisement information delivery system, which delivers or distributes advertisement information through the Internet by using the information recording medium.

### Background Art

As this type of information recording medium, there are optical discs, for example, a CD-R (Compact Disc-Recordable), a DVD-R (DVD-Recordable), a DVD-RW (DVD-ReWritable), a DVD-RAM, a BD (Blu-ray Disc), and the like. In particular, in a patent document 1, there has been suggested a technology in which advertisement or CM (Commercial) is recorded in advance on such an optical disc and which allows a user to watch the advertisement or CM. Moreover, in patent documents 2 and 3, there has been suggested a technology in which advertisement is delivered and recorded through a public line network and which allows a user to watch the advertisement. Finally, in a patent document 4 (cf. the preamble of claim 1), there has been disclosed a DVD including a read-only ROM area in which video is previously recorded, and a readable / writable RAM area.

Patent Document 1: Japanese Patent Application Laid Open No. 2006-178680
Patent Document 2: Japanese Patent Application Laid Open No. 2006-155723
Patent Document 3: Japanese Patent Application Laid Open No. 2006-172530
Patent Document 4: United States Patent Specification US 6 654 547 B1

### Disclosure of Invention

### Subject to be Solved by the Invention

However, according to the aforementioned various background art, it is hard to motivate a user to watch the advertisement in view of a recording method and a reproducing method associated with the advertisement information, which is technically problematic. Moreover, forcing a user to watch the advertisement recorded in advance on the optical disc, or forcing a user to deliver and watch the advertisement with respect to the optical disc may be one factor to prevent the spread of the optical disc or the like. In particular, since a new type of optical disc, such as a BD and a DVD, has more complicated and sophisticated recording layers or the like, it is more expensive than an old type of optical disc, such as a CD, and it is basically hard to be spread, which is also technically problematic.

In view of the aforementioned problems, it is therefore an object of the present invention to provide an information recording medium which can increase a user's motivation to reproduce the advertisement information and which is preferable to be spread, and an advertisement information delivery system which delivers the advertisement information by using the information recording medium.

### Means for Solving the Subject

Hereinafter, an explanation will be given in order on embodiments of the information recording medium and the advertisement information delivery system of the present invention, as the best mode for carrying out the invention.

### (Information Recording Medium)

Hereinafter, an embodiment of an information recording medium of the present invention will be described.

The above object of the present invention can be achieved by an embodiment of an information recording medium according to claim 1 provided with: a recordable area in which data information can be recorded; an advertisement area in which at least one of advertisement information and identification information which identifies the advertisement information is recorded; and a control area in which control information is recorded such that the control information can be read on condition of reproduction of the advertisement information, the control information being necessary to record the data information into the recordable area at a higher speed than a predetermined recording velocity.

According to the embodiment of the information recording medium of the present invention, in the initial state which is immediately after the purchase and distribution of the information recording medium such as a writable optical disc (typically, a DVD-R, or a BD, a DVD-RW, DVD-RAM, and the like), the recordable area is empty or nearly empty. Here, a user tries to record the desired data information into the recordable area as it is (i.e. without reproducing the advertisement information) at a higher speed than the predetermined recording velocity. In this case, it is not possible to read the control information necessary to record the data information at a higher speed than the predetermined recording velocity, such as a recording parameter, like a recording laser power, a recording strategy, or the like, because the advertisement information is not reproduced.

Here, with regard to the control information in the embodiment of the present invention, "control information is recorded such that the control information can be read" means that the control information is recorded such that the control information cannot be read in the initial state, such as being recorded by embossed pits covered by a pigmented film, and then, the control information can be read, for example, by performing DC (Direct Current) writing on condition of the reproduction of the advertisement information, i.e. by performing predetermined types of processes on the information recording medium with the reproduction of the advertisement information as a trigger. Incidentally, it is not only the pigmented film and the DC writing, but as long as the control information is recorded such that it cannot be read in the initial state and it can be read on condition of the reproduction of the advertisement information, the operation effect explained below can be obtained which is unique to the present invention.

Therefore, if the advertisement information is not reproduced, the control information cannot be used, so that the data information cannot be recorded at all or cannot be recorded at a higher speed than the predetermined value even if it is tried to record the data information.

On the other hand, it is assumed that a user tries to record the desired data information into the recordable area after reproducing the advertisement information. Then, this time, the control information necessary for the recording can be read on the reproducing apparatus because the advertisement information is reproduced. Therefore, the read control information can be used, and the data information can be recorded or can be recorded at a higher speed than the predetermined value, as in the normal recording.

Incidentally, the advertisement information is reproduced from the advertisement area on the information recording medium. Alternatively, in addition to or instead of the advertisement information directly reproduced, the advertisement information identified by the identification information reproduced from the advertisement area is reproduced after being downloaded and delivered from the server apparatus through the Internet.

As described above, the information recording medium is recordable on condition of the reproduction of the advertisement information, i.e. it exerts the essential function as the information recording medium for recording. In other words, the information recording medium is remarkably inconvenient as long as the advertisement information is not watched. Thus, a user's motivation to reproduce the advertisement information is extremely high. Thus, by covering the cost of the information recording medium, for example, with the advertising cost of a sponsor who provides the advertisement information, it is possible to establish an extremely favorable situation for the distribution of the information recording medium for free or inexpensively. This is one extremely effective means to encourage the spread of the information recording medium.

In one aspect of the embodiment of the information recording medium of the present invention, the control information is recorded in the control area such that the control information cannot be read in an initial state and that the control information can be read by an application by performing a predetermined process on the control area when the advertisement information is reproduced.

According to this aspect, when a user tries to record the data information as it is, the control information cannot be read not only by a versatile application but also by an exclusive application because the advertisement information is not reproduced. On the other hand, if the user tries to record the data information after reproducing the advertisement information, the control information can be read by the exclusive application because the advertisement information is reproduced. Thus, a recording operation based on the control information can be performed. As described above, by using the exclusive application, it is possible to set the reproduction of the advertisement information to be a condition for recording the data information, more certainly.

In another aspect of the embodiment of the information recording medium of the present invention, flag information indicating whether or not the advertisement information is reproduced is encrypted and recorded in at least one of the recordable area, the advertisement area, and the control area.

According to this aspect, when a user tries to record the data information, it is easily and certainly judged whether or not the reproduction of the advertisement information is performed on the information recording medium, with reference to the flag information. Here, if it is judged that the advertisement information is not reproduced in accordance with the flag information, the control information cannot be read even if the user tries to record the data information. On the other hand, if it is judged that the advertisement information has been already reproduced in accordance with the flag information, the control information can be read when it is tried to record the data information. Thus, the recording operation based on the control information can be performed. As described above, it is possible to set the reproduction of the advertisement information to be the condition for recording the data information, more certainly.

In another aspect of the embodiment of the information recording medium of the present invention, at least one of the recordable area, the advertisement area, and the control area is constructed such that a logo can be added thereto which can be visually recognized from at least one side of the information recording medium, if the advertisement information is reproduced.

According to this aspect, the logo is added to at least one side of the information recording medium if the advertisement information is reproduced. Thus, when the information recording medium is in a recordable state, it is possible to visually express that it is recordable as the logo in an easy-to-understand manner. For example, if the information recording medium is in an unrecordable state in which the data information cannot be recorded thereon at all immediately after the distribution, the information recording medium does not comply with a disc standard, and the logo indicating that it is recordable cannot be added. However, if the advertisement information is reproduced, the information recording medium complies with the disc standard, so that it is possible to add the logo according to the disc standard. The addition of the logo allows the usability of the information recording medium which is typically distributed for free or inexpensively, to be equivalent to commercial information recording media, so that it is extremely useful in practice.

In another aspect of the embodiment of the information recording medium of the present invention, the control area is recorded by embossed pits at least partially.

According to this aspect, in the control area, it is possible to relatively easily realize such construction that the control information recorded by the embossed pits is recorded such that it cannot be read in the initial state and then (i.e. after the reproduction of the advertisement information) it can be read. For example, if the embossed pits are covered with the pigmented film together with a recording layer when the recording layer is formed in the recordable area, the degree of modulation is too small to be read in the initial state. However, the degree of modulation is increased and the embossed pits can be read, by performing predetermined types of processes on the pigmented film, thereby changing a refractive index.

Incidentally, the control information is not recorded by the embossed pits, but may be recorded by so-called wobble or wobbling. On the other hand, not only the control information but also the advertisement information may be recorded by the embossed pits.

In this aspect, the embossed pits may be covered with a pigmented film in an initial state such that the embossed pits can be read by performing a recording process by DC writing.

By virtue of such construction, it is possible to extremely easily realize the state that the control information can be read, after the reproduction of the advertisement information, by virtue of the DC (Direct Current) writing. Here, the "DC writing" is writing without modulating a writing power, i.e. writing with a writing power applied as a constant value of direct current, wherein the writing power is a laser power typically associated with writing laser. As opposed to the normal writing, the power is constant, so that the DC writing can be easily performed.

In another aspect of the embodiment of the information recording medium of the present invention, one portion of the advertisement information is recorded in the advertisement area, and another portion of the advertisement information is delivered from the exterior of the information recording medium.

According to this aspect, one portion of the advertisement information is firstly reproduced from the information recording medium itself, and in tandem with this, another portion of the advertisement information is reproduced after being downloaded and delivered from the server apparatus through the Internet. Thus, it is possible to reproduce the advertisement information while avoiding that the recording capacity of the information recording medium is unnecessarily narrowed due to the presence of the advertisement information.

Incidentally, one portion and another portion of the advertisement information may be inseparably-linked, for example, to the extent that the separation of the both portions cannot be recognized in the reproduction or that the reproduction does not make sense without the both portions. On the other hand, one portion and another portion of the advertisement information may be independent of each other, and moreover, they may be utterly irrelevant to each other in terms of the content. In addition, it is also arbitrary to prioritize the condition in the recording, such as the magnitude of a recordable area size and the degree of the recording velocity, among a case where only one portion of the advertisement information is reproduced, a case where only another portion is reproduced, and a case where the both portions are reproduced.

In another aspect of the embodiment of the information recording medium of the present invention, the advertisement information can be deleted.

According to this aspect, for example, the advertisement information can be deleted after the reproduction is performed once or a predetermined number of times, or after a predetermined period. Thus, it is possible to ensure the effectiveness of a CM (Commercial) contract in which the number of times and the period are generally limited, safely and certainly.

Hereinafter, an explanation will be given on the advertisement information delivery system in an embodiment of the present invention.

### (Advertisement Information Delivery System)

The above object of the present invention can be also achieved by an advertisement information delivery system according to claim 8 including: a client apparatus capable of performing reproduction on an information recording medium; and a server apparatus for delivering advertisement information, the information recording medium provided with: a recordable area in which data information can be recorded; and a control area in which control information is recorded such that the control information can be read on condition of reproduction of the advertisement information, the control information being necessary to record the data information into the recordable area at a higher speed than a predetermined recording velocity, the client apparatus provided with: a reproducing device capable of reproducing the delivered advertisement information; and a recording device for recording the data information on the basis of the control information that can be read, at least one of the client apparatus and the server apparatus provided with: a judging device for judging whether or not the delivered advertisement information is reproduced by the reproducing device; and a controlling device capable of reading the control information if it is judged that the advertisement information is reproduced.

According to the embodiment of the advertisement information delivery system of the present invention, firstly, a user tries to record the desired data information by using the recording device into the recordable area as it is (i.e. without reproducing the advertisement information) on the client apparatus, such as a home-use recorder and a personal computer used by the user. Then, it is judged that the advertisement information is not reproduced, by the judging device provided with a controller, a memory, and the like, so that the control information necessary for the recording cannot be read. Therefore, since the control information cannot be used, the data information cannot be recorded at all or cannot be recorded at a higher speed than the predetermined value even if it is tried to record the data information.

Here, the advertisement information is reproduced by the reproducing device on the client apparatus after being downloaded and delivered from the server apparatus to the client apparatus, for example, through the Internet. Incidentally, the advertisement information is identified by the identification information reproduced from the advertisement area owned by the information recording medium by the reproducing device.

As described above, the user tries to record the desired data information into the recordable area after reproducing the advertisement information by the reproducing device on the client apparatus. Then, this time, it is judged by the judging device that the advertisement information is reproduced, and the control information necessary for the recording can be read on the client apparatus. Therefore, since the read control information can be used on the client apparatus, it is possible to record the data information or record it at a higher speed than the predetermined value, as in the normal recording.

As described above, the information recording medium is recordable on condition of the reproduction of the advertisement information delivered from the server apparatus, so that the user's motivation to reproduce the advertisement information is extremely high.

Incidentally, the embodiment of the advertisement information delivery system of the present invention can also adopt the same various aspects as those of the embodiment of the information recording medium of the present invention described above, as occasion demands.

In one aspect of the embodiment of the advertisement information delivery system of the present invention, the information recording medium is further provided with an advertisement area in which at least identification information is recorded out of one portion of the advertisement information and the identification information which identifies the advertisement information, and the server apparatus is further provided with a storing device for storing the advertisement information in advance and an identification information delivering device for delivering the advertisement information corresponding to the recorded identification information out of the stored advertisement information.

According to this aspect, the advertisement information is stored in advance in the server apparatus. From among them, the advertisement information identified by the identification information reproduced from the advertisement area owned by the information recording medium by the reproducing device is delivered to the client apparatus. Then, the delivered advertisement information is reproduced by the reproducing device on the client apparatus.

As explained above in detail, according to the information recording medium of the present invention, it is provided with the recordable area, the advertisement area, and the control area. Thus, the information recording medium can increase a user's motivation to reproduce the advertisement information, and it is easily spread. Moreover, according to the advertisement information delivery system of the present invention, the information recording medium is provided with the recordable area, the advertisement area, and the control area, and at least one of the client apparatus and the server apparatus is provided with the judging device and the controlling device. Thus, it is possible to increase a user's motivation to reproduce the advertisement information, and it is possible to spread the information recording medium.

These operation and other advantages of the present invention will become more apparent from the examples explained below.

### Brief Description of Drawings

[FIG. 1] FIGs. 1 are data structure diagrams of information recording media in first and second examples.
[FIG. 2] FIG. 2 is a flowchart showing a non-network correspondence data recording control process in the first and second examples.
[FIG. 3] FIG. 3 is a flowchart showing a data recording process in the first and second examples.
[FIG. 4] FIG. 4 is a schematic diagram showing an advertisement information delivery system in third and fourth examples.
[FIG. 5] FIGs. 5 are data structure diagrams of information recording media in the third and fourth examples.
[FIG. 6] FIG. 6 is a flowchart showing a network correspondence data recording control process in the third and fourth examples.
[FIG. 7] FIG. 7 is a flowchart showing a data recording process in the fourth example.

### Description of Reference Codes

- 1: recordable area
- 2: advertisement area
- 3: control area
- 20: personal computer
- 25: reproduction device
- 26: recording device
- 27: CM delivery server
- 29: reproduction judgment device
- 30: recording control device
- 31: CM delivery device
- 32: memory
- 100: information recording medium
- 200: advertisement information delivery system

### Best Mode for Carrying Out the Invention

Hereinafter, examples of the present invention will be described with reference to the drawings.

### <First and Second Examples>

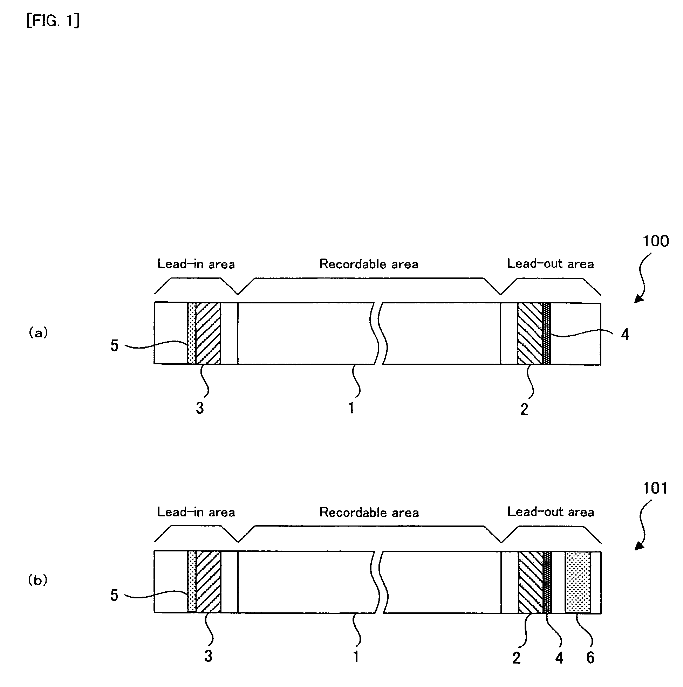

Firstly, the structures of information recording media in first and second examples will be described with reference to FIGs. 1. FIG. 1(a) and FIG. 1(b) are data structure diagrams of the information recording media in the first and second examples, respectively. Firstly, the basic data structure shown in FIG. 1(a) will be described.

In the first and second examples, the reproduction and recording on the information recording media shown in FIG. 1(a) and FIG. 1(b) are performed by a user who uses a personal computer, an optical disc recorder or the like which are not illustrated, as one example of the "client apparatus" in the examples.

In FIG. 1(a), an information recording medium 100 in the first example is, for example, a rewritable optical disc, and it is provided mainly with a recordable area 1, an advertisement area 2, and a control area 3.

As shown in FIGs. 1, the recordable area 1 is empty in which data information is not recorded in the recordable area in an initial state, so that the data information can be recorded therein. In the example, however, the recordable area 1 is constructed such that if advertisement information described later is not reproduced, a CPU provided for a personal computer, which is specifically its recording device, cannot read control information necessary to perform a recording process as described later and the data information cannot be recorded.

The advertisement area 2 is disposed in a lead-out area located near the outer circumference of the disc, and the advertisement information is recorded therein. One portion of the advertisement area 2 is a flag area 4 in which flag information is encrypted and recorded, wherein the flag information indicates whether or not the advertisement information is reproduced.

The reproduction device of the CPU, after reproducing the advertisement information, records the flag information into the flag area 4 and sets a CM reproduction flag. The recording device reads the flag information in the flag area 4 when the data information is recorded. Incidentally, as shown in the examples, the flag information is not recorded into the advertisement area 2 provided with the flag area 4 but may be recorded into either the recordable area 1 or the control area 3 described later, or may be recorded into the plurality of areas.

The advertisement information is deleted simultaneously with the end of the reproduction. The timing to delete the advertisement information can be set to, for example, a time point at which the number of reproduction times exceeds a predetermined number of reproduction times, a time point at which a predetermined period has elapsed, or the like, as occasion demands. Incidentally, the advertisement information may be left in the advertisement area 2 without being deleted simultaneously with the end of the reproduction, as shown in the examples.

The control area 3 is disposed in a lead-in area, and the control information is recorded therein. The control information is a recording parameter or the like necessary to record the data information into the recordable area 1. The control information is recorded, for example, in a state of being covered with a pigmented film by embossed pits, and it cannot be read by an exclusive application recorded in advance in the recording device in the initial state. The control information can be read by the application by eliminating the pigmented film covering the embossed pits which makes the reading impossible, by DC writing, from the embossed pits, on condition of the reproduction of the advertisement information.

The recording device reads the control information and uses it, thereby recording the data information into the recordable area 1. Incidentally, the control information recorded by the embossed pits in the control area 3 may be one portion including the recording parameter.

One portion of the control area 3 is a logo area 5 in which a logo which can be visually recognized from one side of the information recording medium 100 is added if the advertisement information is reproduced and the CM reproduction flag is set. The logo is to indicate that the data information can be recorded. The addition of the logo makes it obvious that the data information can be recorded, and it increases the usability of the information recording medium as high as commercial information recording media. The recording device changes the control information into the readable state by a DC writing recording process and then draws the logo in the logo area 5. Incidentally, as shown in the examples, the logo is not added to the control area 3 provided with the logo area 5, but may be added to either the recordable area 1 or the advertisement area 2, or may be added to the plurality of areas.

Next, an explanation will be given on the data structure of an information recording medium 101 shown in FIG. 1(b) in which one area is further added to the data structure of the information recording medium 100 shown in FIG. 1(a).

In FIG. 1(b), the information recording medium 101 in the second example, as in the aforementioned information recording medium 100, is provided with the recordable area 1, the advertisement area 2, and the control area 3. The aforementioned information recording medium 100 records the data information on condition of the reproduction of the advertisement information, whereas the information recording medium 101 in the second example can record the data information at a high speed on condition of the reproduction of the advertisement information.

In the control area 3, as in the first example, the control information which is necessary not only to record the data information into the recordable area 1 but also to record the data information at a higher speed than a predetermined recording velocity, for example, the address of a high-speed parameter described later, is recorded.

As shown in FIG. 1(b), in the lead-out area, not only the advertisement area 2 but also a high-speed parameter recording area 6 are disposed. In the high-speed parameter recording area 6, a high-speed parameter is encrypted and recorded, which is necessary to speed up the data recording. The high-speed parameter indicates a variable recording velocity v1 when the data information is recorded, for example, a predetermined recording velocity v0MB/sec increases at double speed in accordance with the number of reproduction times. It is set to be a recording velocity v0MB/sec×2 in one time of reproduction, a recording velocity v0MB/sec×4 in two times of reproduction, a recording velocity v0MB/sec×8 in three times of reproduction, and so on. With regard to the number of times to reproduce the advertisement information, the number of reproduction times NO is counted every time the advertisement information is reproduced, and it is recorded as the flag information. Incidentally, the variable recording velocity v1 may be set in accordance with the amount of advertisement information reproduced, for example, the type, reproduction time, or the like of the advertisement information, in addition to the number of times to reproduce the advertisement information.

The recording device reads the control information and reads the address of the high-speed parameter included in the control information. The address is rewritten so that the high-speed parameter is changed on the basis of the flag information, which is the number of times to reproduce the advertisement information here. The recording device, when reading the high-speed parameter in the high-speed parameter recording area 6 indicated by the address, sets the variable recording velocity v1 on the basis of the high-speed parameter. By this, the recording velocity for the recordable area 1 is set to be faster than the predetermined recording velocity, so that the data information is recorded at a high speed. As described above, reading and using the control information which cannot be read in the beginning allows the high-speed recording of the data information.

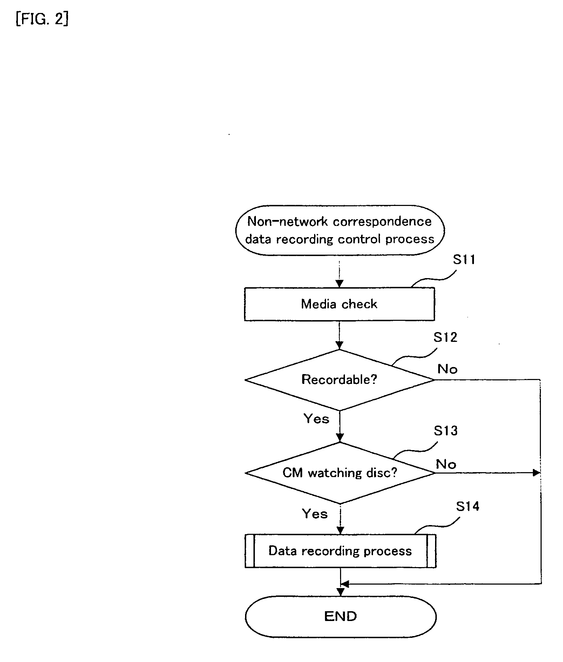

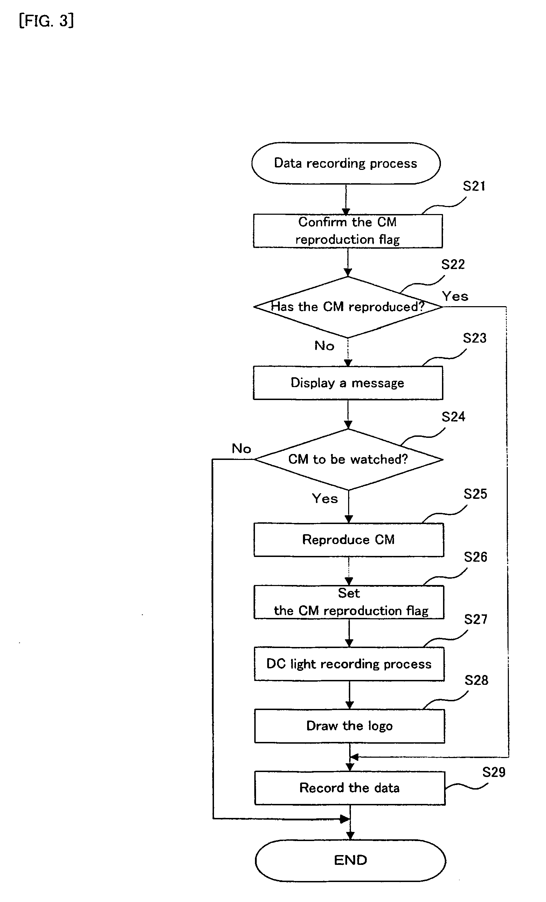

Next, a data recording control process using the information recording medium 100 in the first example will be described with reference to FIG. 2 and FIG. 3.

### (Data Recording Control Process in First Example)

FIG. 2 and FIG. 3 are flowcharts showing the data recording control process of the information recording medium 100, i.e. the basic operation process in the example.

Specifically, in FIG. 2, firstly, when the information recording medium 100 is set on a drive of a personal computer by a user, the property of the information recording medium 100 is checked by the recording device (step S11). Then, it is judged whether or not the recordable area 1 of the information recording medium 100 is recordable (step S12). If the recordable area 1 is not recordable (the step S12: No), the operation process is ended here. On the other hand, if the recordable area 1 is recordable (the step S12: Yes), it is judged whether or not to the information recording medium 100 is a CM watching disc (step S13). If the information recording medium 100 is not a CM watching disc (the step S13: No), the operation process is ended here. On the other hand, if the information recording medium 100 is the CM watching disc (the step S13: Yes), the data recording process is performed (step S14).

Then, in FIG. 3, the flag information in the flag area 4 is read by the reproduction device and the CM reproduction flag is confirmed (step S21), and it is judged whether or not the advertisement information in the advertisement area 2 has been already reproduced (step S22). If the advertisement information has been already reproduced (the step S22: Yes), the data information is recorded by the recording device into the empty recordable area 1 (step S29). On the other hand, if the advertisement information has not been reproduced (the step S22: No), a message indicating that "Reproducing CM allows you to perform writing" is displayed on a not-illustrated monitor of the personal computer (step S23).

Then, after the display of the message, whether or not to watch the CM is instructed by the user (step S24), and if the CM is not to be watched (the step S24: No), the operation process is ended. On the other hand, if the CM is to be watched (the step S24: Yes), the advertisement information is reproduced on the reproduction device (step S25). When the reproduction of the advertisement information is ended, the recording of the flag information, i.e. the CM reproduction flag, is set for the flag area 4 (step S26).

When the CM reproduction flag is set, the control information in the control area 3 is set to be readable by the recording device (step S27), and by using this, the data information can be recorded into the recordable area 1, and the logo is drawn into the logo area 5 (step S28). After this, if the desired data recording is instructed by the user, the data recording onto the information recording medium 100 is started (the step S29).

As described above, the information recording medium 100 is provided with the advertisement area 2 with the advertisement information recorded and the control area 3 with the control information recorded. If the advertisement information is reproduced, the control information is read by the recording device, and the desired data information can be recorded by using the control information. As described above, the information recording medium exerts the essential data recording function on condition of the reproduction of the advertisement information, so that it is possible to increase the user's motivation to reproduce the advertisement information. Moreover, the cost of the information recording medium is covered, for example, by a sponsor who provides the advertisement information, so that the information recording medium can be distributed for free or inexpensively, which can encourage the spread of the information recording medium.

### (Data Recording Control Process in Second Example)

FIG. 2 and FIG. 3 showing the operation process in the first example are also flowchart showing a data recording control process of the information recording medium 101 in the second example. Thus, an explanation will be omitted on the process that overlaps that in the first example, and only a process different from that in the first example will be explained.

In the data recording control process in the second example, one portion of the DC writing recording process (the step S27) is different from the operation process in the first example.

Specifically, if the control information is changed into a readable state by the recording device in the DC writing recording process, the data information becomes recordable, and moreover, the high-speed parameter in the high-speed parameter recording area 6 is read from the address included in the control information read before the actual recording, and the variable recording velocity v1 is set (the step S27). Then, as in the first example, after the logo drawing (the step S28), the data information is recorded. At this time, the data information is recorded at a high speed by virtue of the set variable recording velocity v1 (the step S29).

As described above, the information recording medium 101 in the second example is provided with the high-speed parameter recording area 6 with the high-speed parameter recorded, in addition to the advertisement area 2 and the control area 3. If the advertisement information is reproduced, the control information which is set to be readable in response to the reproduction and which is necessary for the high-speed recording is read before the actual recording process, i.e. the control information including the address of the high-speed parameter is read, so that the data information can be recorded at a high speed. As described above, since the usability is improved as the information recording medium for recording on condition of the reproduction of the advertisement information, the information recording medium can increase the user's motivation to reproduce the advertisement information. Moreover, the cost of the information recording medium is covered, for example, by a sponsor who provides the advertisement information, so that the information recording medium can be distributed for free or inexpensively, which can encourage the spread of the information recording medium.

### <Third and Fourth Examples>

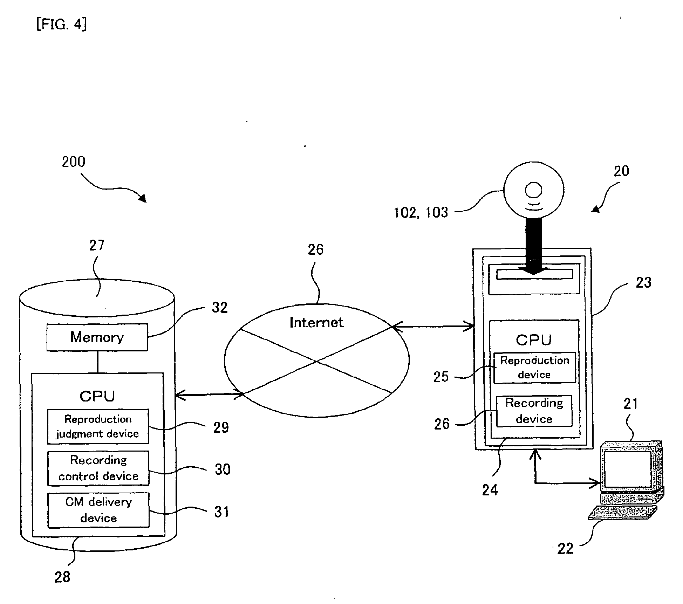

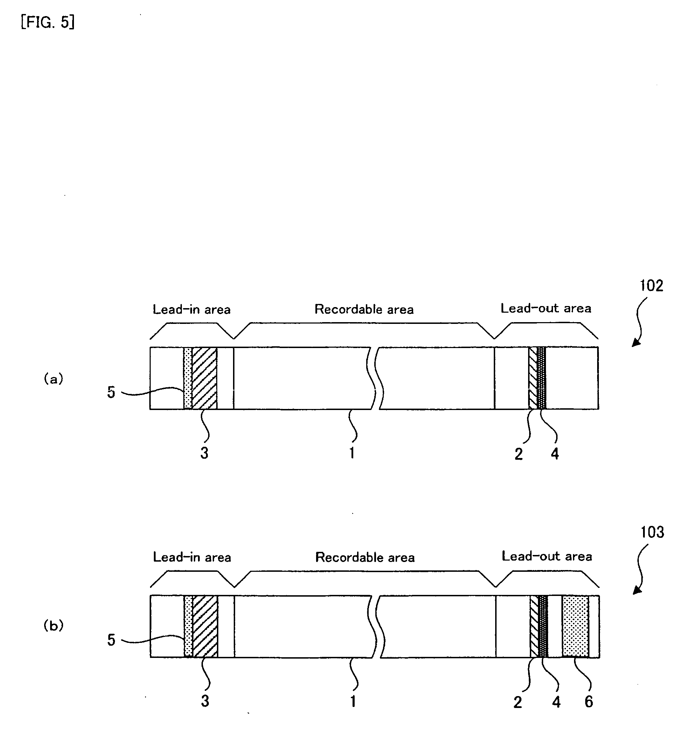

Next, an advertisement information delivery system in third and fourth examples will be described with reference to FIG. 4 and FIGs. 5. FIG. 4 is a schematic diagram showing the advertisement information delivery system. FIGs. 5 are data structure diagrams to the same effect as in FIG. 1 in the first and second examples. Incidentally, in FIGs. 5, the same constituents as those shown in FIG. 1 will carry the same referential numerals, and the explanation thereof will be omitted as occasion demands.

In FIG. 4, in the advertisement information delivery system in the third and fourth examples, the information recording medium to be used corresponds to the Internet. In other words, for example, the information recording medium whose disc type is "Internet-compatible" functions such that the advertisement information is delivered from a server apparatus to a client apparatus through the Internet, and it exerts the essential data recording function on condition of the reproduction of the delivered advertisement information.

As shown in FIG. 4, an advertisement information delivery system 200 in the third and fourth examples is provided mainly with a personal computer 20 and a CM delivery server 27. The personal computer 20 and the CM delivery server 27 are connected, for example, through the Internet, and they can transmit and receive the data.

The personal computer 20 can perform the reproduction and recording on information recording media 102 and 103, as one example of the "client apparatus" in the examples. The personal computer 20 is provided with a display 21, a keyboard 22, and a hard disk 23.

The hard disk 23 is provided with a CPU 24. The CPU 24 is provided with a reproduction device 25 and a recording device 26.

The reproduction device 25 can reproduce and display the advertisement information delivered by the CM delivery server 27, on the display 21, as one example of the "reproducing device" in the examples. The reproduction device 25 reads identification information described later from the advertisement area 2 and inputs it to the CM delivery server 27. Due to the input of the identification information, the reproduction device 25 downloads the advertisement information corresponding to the identification information from the CM delivery server 27, thereby reproducing the desired advertisement information. The reproduction device 25, after reproducing the advertisement information, records the flag information into the flag area 4 of the information recording medium 102 and sets the CM reproduction flag.

The reproduction device 25, when the information recording medium 103 provided with the high-speed parameter recording area 6 is used, counts the variable NO every time the advertisement information is reproduced, records it as watching information into the flag area 4, and inputs the watching information to the CM delivery server 27.

The recording device 26 records the desired data information onto the information recording media 102 and 103 on the basis of the control information in the control area 3, as one example of the "recording device" in the examples. The recording device 26 can record the data information only if obtaining a recording right code outputted from a recording control device 30 described later.

The recording device 26, when the information recording medium 103 provided with the high-speed parameter recording area 6 is used, obtains the high-speed parameter delivered from the CM delivery server 27. The recording device 26 records the high-speed parameter from the CM delivery server 27 into the high-speed parameter recording area 6, and it sets the variable recording velocity v1 on the basis of the high-speed parameter.

The CM delivery server 27 delivers the advertisement information through the Internet 26, as one example of the "server apparatus" in the examples. The CM delivery server 27 is provided with a CPU 28 and a memory 32. The CPU 28 is provided with a reproduction judgment device 29, the recording control device 30, and a CM delivery device 31.

The reproduction judgment device 29 reads the flag information recorded in the flag area 4 of the information recording medium 102 and judges whether or not the advertisement information from the CM delivery server 27 is reproduced by the reproduction device 25 of the personal computer 20, as one example of the "judging device" in the examples.

The recording control device 30 outputs the recording right code, which makes the control information readable that is recorded in the control area 3 of the information recording medium 102, if it is judged that the advertisement information is reproduced on the personal computer 20, as one example of the "controlling device" in the examples.

The recording control device 30, when the information recording medium 103 provided with the high-speed parameter recording area 6 is used, accumulates a CM reproduction point P0 for each user every time the recording right code is outputted.

The CM delivery device 31 delivers the advertisement information corresponding to the identification information recorded in the advertisement area 2 of the information recording medium 102, to the personal computer 20, as one example of the "delivering device" in the examples.

The memory 32 stores a plurality of advertisement information, user information about a user who accesses the CM delivery server 27, or the like, in advance, as one example of the "storing device" in the examples. In particular, the memory 32 stores a membership number, a name, a downloaded advertisement information number, a reproduction point, and the like, as the user information.

The CPU 28 controls each device of the CM delivery server 27 while inputting and outputting various data with respect to the personal computer 20. The CPU 28 outputs the CM reproduction point, the advertisement information, the recording right code, the high-speed parameter and the like, to the personal computer 20, and receives the input of the user's membership number, the identification information associated with the advertisement information, the flag information and the like, from the personal computer 20.

In particular, the CPU 28 performs a member judgment process in response to the input of the user's membership number. In the member judgment process, it is judged whether or not a user is a member. In the judgment, if the inputted membership number corresponds to any piece of member information stored in the memory 32, it is judged that the user is the member, so that the user is allowed to log in the CM delivery server 27 and the access from the personal computer 20 is allowed.

The CPU 28, when the information recording medium 103 provided with the high-speed parameter recording area 6 is used, delivers the high-speed parameter according to the CM reproduction point P0 inputted by a user, to the personal computer 20. For example, for the CM reproduction point P0, only the CM reproduction point that a user oneself reproduces the advertisement information and accumulates can be used. Moreover, as the used CM reproduction point P0 is larger, the variable recording velocity v1 is higher. Moreover, the high-speed parameter is effective to one information recording medium. Thus, by the recording device 26, the data recording is ended and the high-speed parameter recorded in the high-speed recording area 6 is deleted.

Incidentally, each of the reproduction judgment device 29 and the recording control device 30 is disposed on the CM delivery server 27 side, as shown in the examples; however, they may be disposed on the personal computer 20 side.

Next, the structures of the information recording media in the examples will be described with reference to FIGs. 5. FIG. 5(a) and FIG. 5(b) are data structure diagrams showing the information recording media in the third and fourth examples.

In FIG. 5(a) and FIG. 5(b), each of the information recording media 102 and 103 differs from the information recording media 100 and 101 in that the advertisement information is not recorded in the advertisement area 2. In the information recording media 102 and 103, instead of the advertisement information, the identification information which identifies the advertisement information is recorded in the advertisement area 2. The advertisement information that is not recorded in the advertisement area 2 is delivered from the CM delivery server 27. Incidentally, in the advertisement area 2, one portion of the advertisement information may be recorded, in addition to the identification information.

Next, an explanation will be given on a difference between the information recording medium 102 shown in FIG. 5(a) and the information recording medium 103 shown in FIG. 5(b). Each of the information recording media 102 and 103 differs in that the control information recorded in the control area 3 allows the data information to be recorded or the data information to be recorded at a high speed, on condition of the reproduction of the advertisement information, as in the difference between the information recording media 100 and 101 in the first and second examples. By this, in the information recording medium 103 shown in FIG. 5(b), the high-speed parameter recording area 6 is disposed, as in the information recording medium 101 in the second example.

### (Data Recording Control Process in Third and Fourth Examples)

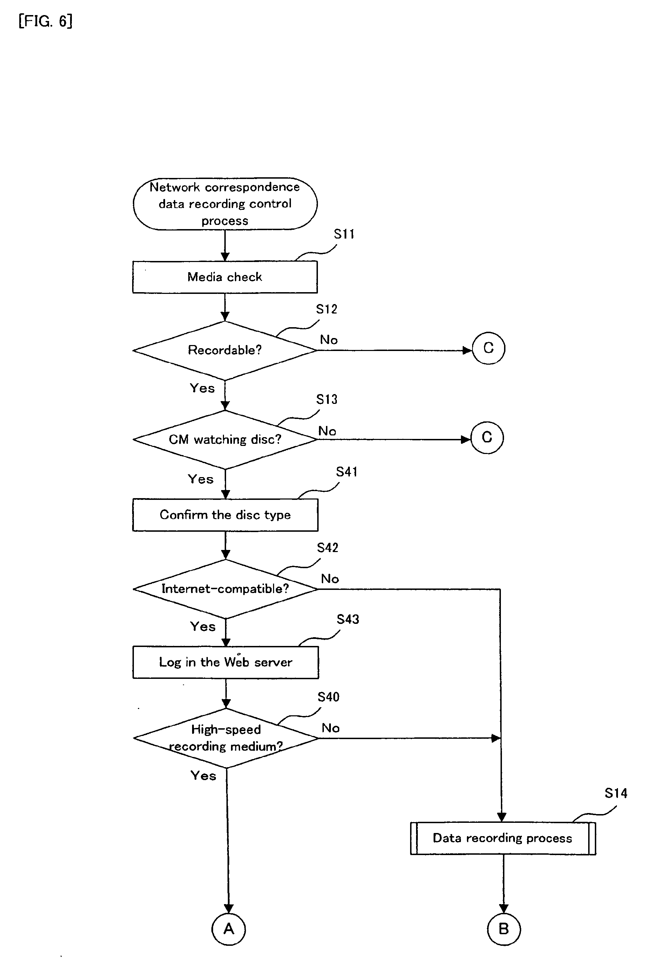

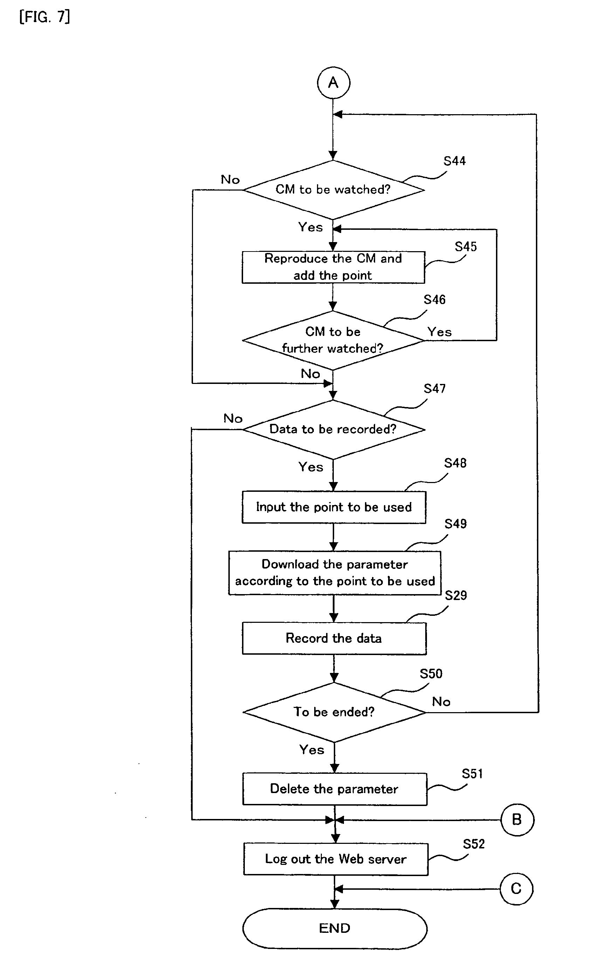

FIG. 6 and FIG. 7 are flowcharts showing the data recording control process in the information recording media 102 and 103 in the third and fourth examples.

Specifically, firstly, the information recording medium 102 or 103 is set on the drive of the personal computer by a user, and exclusive application software downloaded in advance from the CM delivery server 27 is started. In FIG. 6, as in the operation process in the first and second examples shown in FIG. 2, the property of the information recording medium 102 or 103 is checked by the recording device (the step S11). Then, it is judged whether or not the recordable area 1 of the information recording medium 102 or 103 is recordable (the step S12). Here, if the recordable area 1 is not recordable (the step S12: No), the operation process is ended. On the other hand, if the recordable area 1 is recordable (the step S12: Yes), it is judged whether or not the information recording medium 102 or 103 is the CM watching disc (the step S13). If the information recording medium 102 or 103 is not the CM watching disc (the step S13: No), the operation process is ended. On the other hand, if the information recording medium 102 or 103 is the CM watching disc (the step S13: Yes), its disc type is confirmed (step S41). If the disc type is not "Internet-compatible" (step S42: No), the data recording process shown in FIG. 3 is performed (the step S14). On the other hand, if the disc type is "Internet-compatible" (step S42: Yes), the membership number is inputted by the user on a screen displayed by the application software. If the inputted membership number is transmitted to the CM delivery server 27 and it is judged by the CPU 28 that the user is the member, the login is allowed and the access to the CM delivery server 27 of the personal computer 20 is started (step S43).

After the personal computer 20 accesses the CM delivery server 27, it is judged whether or not the information recording medium is a high-speed recordable medium (step S40). When the information recording medium 102 in the third example is used, it is judged that it is not the high-speed recordable medium (the step S40: No), and the data recording process shown in FIG. 3 is performed (the step S14).

Hereinafter, an explanation will be given on the rest of the data recording control process using the information recording medium 102 in the third example.

In FIG. 3, by the reproduction judgment device 25 of the CM delivery server 27, the flag information in the flag area 4 is read and the CM reproduction flag is confirmed (the step S21), and it is judged whether or not the advertisement information corresponding to the identification information has been already reproduced (the step S22). If the advertisement information has been already reproduced (the step S22: Yes), the recording right code, which makes the control information readable, is outputted from the recording control device 30, and the data information is recorded into the empty recordable area 1 (the step S29). On the other hand, if the advertisement information has not been already reproduced (the step S22: No), a message indicating that "Downloading and reproducing CM allows you to perform writing" is displayed on the display 21 (the step S23).

Then, after the display of the message, whether or not to watch the CM is instructed by the user (the step S24), and if the CM is not to be watched (the step S24: No), the series of operation process is ended after the logout from the CM delivery server 27. On the other hand, if the CM is to be watched (the step S24: Yes), the identification information associated with the advertisement information is inputted to the CM delivery serve 27 by the reproduction device 25, and the advertisement information corresponding to the identification information is reproduced by virtue of the delivery from the CM delivery device 31 (the step S25). When the reproduction of the advertisement information is ended, the recording of the flag information, i.e. the CM reproduction flag, is set for the flag area 4 (the step S26).

After the CM reproduction flag is set, the control information in the control area 3 is read by the recording device 26 by obtaining the recording right code (the step S27), so that the data information can be recorded into the recordable area 1, and the logo is drawn into the logo area 5 (the step S28). After this, if the desired data recording is instructed by the user, the data recording onto the information recording medium 102 is started (the step S29). When the data recording is ended, the personal computer 20 logged out from the CM delivery server 27, and the access to the CM delivery server 27 of the personal computer 20 is stopped (step S52).

As described above, the information recording medium 102 in the third example is compatible with the Internet, and as in the first and second examples, it is provided with the advertisement area 2 and the control area 3. Moreover, if the advertisement information is obtained through the Internet due to the identification information associated with the advertisement information and the reproduction of the advertisement information is recognized on the CM delivery server 27 side, the control information is made readable. Then, by using this, the desired data information can be recorded. As described above, since the information recording medium exerts the essential data recording function on condition of the reproduction of the advertisement information, it is possible to increase the user's motivation to reproduce the advertisement information. Moreover, the cost of the information recording medium is covered, for example, by a sponsor who provides the advertisement information, so that the information recording medium can be distributed for free or inexpensively, which can encourage the spread of the information recording medium.

Next, an explanation will be given on the rest of the data recording control process using the information recording medium 103 in the fourth example.

It is judged whether or not the information recording medium is the high-speed recordable medium (the step S40). When the information recording medium 103 in the fourth example is used, it is judged that it is the high-speed recordable medium (the step S40: Yes), and whether or not to watch the CM is instructed by the user, as shown in FIG. 7 (step S44). If the CM is not to be watched (the step S44: No), it is judged whether or not to use the accumulated CM reproduction point (step S47). On the other hand, if the CM is to be watched (the step S44: Yes), the identification information associated with the advertisement information is inputted to the CM delivery server 27 by the reproduction device 25, and the advertisement information corresponding to the identification information is reproduced by the delivery from the CM delivery device 31. Moreover, along with the reproduction, the CM reproduction point is added (step S45). Then, whether or not to further watch the CM is instructed by the user (step S46). If the CM is to be further watched (the step S46: Yes), the advertisement information is reproduced again, and the CM reproduction point is added (the step S45). On the other hand, if the CM is not to be watched (the step S46: No), whether or not to use the accumulated CM reproduction point is instructed by the user (step S47). If the CM reproduction point is not to be used (the step S47: No), the personal computer 20 is logged out from the CM delivery server 27 (the step S52), and the operation process is ended. On the other hand, if the CM reproduction point is to be used (the step S47: Yes), the CM reproduction point to be used is inputted by the user after the display of the accumulated CM reproduction point on the display 21 (step S48). If the high-speed parameter according to the inputted CM reproduction point is delivered from the CM delivery server 27, the high-speed parameter is recorded into the high-speed parameter recording area 6 and the variable recording velocity v1 is set by the recording device 26 (step S49). Then, if the desired data recording is instructed by the user, the data information is recorded onto the information recording medium 103 at a high-speed which is the set variable recording velocity v1 (the step S29).

After the recording of the data information is ended, whether or not to end the data recording is instructed by the user (step S50). If the data recording is to be continued (the step S50: No), whether or not to watch the CM is instructed again by the user (the step S44). On the other hand, if the data recording is to be ended (the step S50: Yes), the high-speed parameter recorded in the high-speed parameter recording area 6 is deleted (step S51). Then, if the personal computer 20 is logged out from the CM delivery server 27 and the access to the CM delivery server 27 of the personal computer 20 is stopped (the step S52), the series of data recording control process is ended.

As described above, the information recording medium 103 in the fourth example is compatible with the Internet, and as in the second examples, it is provided with the high-speed parameter recording area 6 with the high-speed parameter recorded, in addition to the advertisement area 2 and the control area 3. Moreover, if the advertisement information is obtained through the Internet due to the identification information associated with the advertisement information and the reproduction of the advertisement information is recognized on the CM delivery server 27 side, the control information including the address of the high-speed parameter is read, and the data information can be recorded at a high speed. As described above, since the information recording medium exerts the essential data recording function on condition of the reproduction of the advertisement information, it is possible to increase the user's motivation to reproduce the advertisement information. Moreover, the cost of the information recording medium is covered, for example, by a sponsor who provides the advertisement information, so that the information recording medium can be distributed for free or inexpensively, which can encourage the spread of the information recording medium.

Incidentally, according to the third and fourth examples, the advertisement information is obtained from the CM delivery server 27 through the Internet; however, the advertisement information may be recorded in the advertisement area 2, as in the information recording medium in the first and second examples, such that the advertisement information can be obtained from both the information recording medium and the CM delivery server 27. For example, the first CM watching may be performed by reproducing the advertisement information recorded on the information recording medium, and the second CM watching may be performed by reproducing the advertisement information from the CM delivery server 27. In this case, the control information may be recorded such that the recording capacity is set to a predetermined recording capacity in the first CM watching and that the recording capacity is several times larger than the predetermined recording capacity in the second CM watching.

Incidentally, the advertisement information delivery system in the examples can also adopt the same various aspects as those of the information recording medium in the first and second examples described above, as occasion demands.

The present invention is not limited to the aforementioned examples, but various changes may be made, if desired, without departing from the scope of the invention which can be read from the claims and the entire specification.

### Industrial Applicability

The present invention can be applied to an information recording medium such as an optical disc which is convenient for the spread, or an advertisement information delivery system or the like preferable to encourage the spread of such an information recording medium.

## Claims

1. An information recording medium (100) comprising:
a recordable area (1) in which data information is recorded; and
an advertisement area (2) in which at least one of advertisement information and identification information which identifies the advertisement information is recorded;
**characterized in that** said information recoding medium (100) comprises:
a control area (3) in which control information is recorded, the control information being necessary to record the data information into the recordable area (1) at a higher speed than a predetermined recording velocity;
wherein the control information is recorded in said control area (3) such that the control information cannot be read in an initial state and that the control information can be read by an application by performing a predetermined process on said control area (3) when the advertisement information is reproduced.

2. The information recording medium (100) according to claim 1, wherein flag information indicating whether or not the advertisement information is reproduced is encrypted and recorded in at least one of the recordable area (1), the advertisement area (2), and the control area (3).

3. The information recording medium (100) according to claim 1 or 2, wherein at least one of the recordable area (1), said advertisement area (2), and said control area (3) is constructed such that a logo can be added thereto which can be visually recognized from at least one side of said information recording medium (100), if the advertisement information is reproduced.

4. The information recording medium (100) according to any one of claims 1 to 3, wherein said control area (3) is recorded by embossed pits at least partially.

5. The information recording medium (100) according to claim 4, wherein the embossed pits are covered with a pigmented film in an initial state such that the embossed pits can be read by performing a recording process by DC writing.

6. The information recording medium (100) according to any one of claims 1 to 5, wherein one portion of the advertisement information is recorded in said advertisement area (2), and another portion of the advertisement information is delivered from the exterior of said information recording medium (100).

7. The information recording medium (100) according to any one of claims 1 to 6, wherein the advertisement information can be deleted.

8. An advertisement information delivery system (200) **characterized in that** said advertisement information delivery system (200) includes: a client apparatus (20) capable of performing reproduction on an information recording medium (100) according to claim 1; and a server apparatus (27) for delivering advertisement information,
said client apparatus (20) comprising: a reproducing device (25) capable of reproducing the delivered advertisement information; and a recording device (26) for recording data information on the basis of the control information,
at least one of said client apparatus (20) and said server apparatus (27) comprising: a judging device (29) for judging whether or not the delivered advertisement information is reproduced by said reproducing device (25); and a controlling device (30) capable of reading the control information if it is judged that the advertisement information is reproduced.

9. The advertisement information delivery system (200) according to claim 8, wherein
said information recording medium (100) comprises said advertisement area (2) in which at least identification information is recorded out of one portion of the advertisement information and the identification information which identifies the advertisement information, and
said server apparatus (27) comprises a storing device (32) for storing the advertisement information in advance and an identification information delivering device (31) for delivering the advertisement information corresponding to the recorded identification information out of the stored advertisement information.

10. The information recording medium (100) according to any one of claims 1 to 7, wherein
the control information includes a high-speed parameter which indicates a velocity in recording the data information at a high speed, and
the high-speed parameter is delivered from the exterior of the information recording medium (100) and is recorded into the control area (3).

11. The advertisement information delivery system (200) according to claim 8 or 9, wherein
the control information includes a high-speed parameter which indicates a velocity in recording the data information at a high speed,
said server apparatus (27) further comprises a parameter delivering device (28) for delivering the high-speed parameter if it is judged that the advertisement information is reproduced,
said client apparatus (20) further comprises an updating / recording device (26) for updating and recording the control information such that the delivered high-speed parameter is included in the control information, and
at least one of said client apparatus (20) and said server apparatus (27) makes the updated and recorded control information readable by said controlling device (30).

## Patentansprüche

1. Ein Informationsaufzeichnungsmedium (100), aufweisend:
einen Aufzeichnungsbereich (1), in welchem Dateninformation aufgezeichnet ist; und
einen Werbeanzeigenbereich (2), in welchem mindestens eine Information aus einer Werbeanzeigeninformation und einer Identifikationsinformation, welche die Werbeanzeigeninformation identifiziert, aufgezeichnet ist,
**dadurch gekennzeichnet, dass** das Informationsaufzeichnungsmedium (100) aufweist:
einen Steuerungsbereich (3), in welchem Steuerungsinformation aufgezeichnet ist, wobei die Steuerungsinformation erforderlich ist zum Aufzeichnen der Dateninformation in den Aufzeichnungsbereich (1) mit einer Geschwindigkeit, die höher als eine vorbestimme Aufzeichnungsgeschwindigkeit ist;
wobei die Steuerungsinformation derart in dem Steuerungsbereich (3) aufgezeichnet ist, dass die Steuerungsinformation in einem Anfangszustand nicht gelesen werden kann und dass die Steuerungsinformation von einer Anwendung gelesen werden kann, indem ein vorbestimmter Vorgang in dem Steuerungsbereich (3) durchgeführt wird, wenn die Werbeanzeigeninformation wiedergegeben ist.

2. Informationsaufzeichnungsmedium (100) gemäß Anspruch 1, wobei Markierungsinformation, welche anzeigt, ob die Werbeanzeigeninformation wiedergegeben ist, verschlüsselt ist und mindestens in einem Bereich aus dem Aufzeichnungsbereich (1), dem Werbeanzeigenbereich (2) und dem Steuerungsbereich (3) aufgezeichnet ist.

3. Informationsaufzeichnungsmedium (100) gemäß Anspruch 1 oder 2, wobei mindestens ein Bereich aus dem Aufzeichnungsbereich (1), dem Werbeanzeigenbereich (2) und dem Steuerungsbereich (3) derart ausgebildet ist, dass dem Bereich ein Logo hinzugefügt werden kann, welches von mindestens einer Seite des Informationsaufzeichnungsmediums (100) sichtbar ist, wenn die Werbeanzeigeninformation wiedergegeben ist.

4. Informationsaufzeichnungsmedium (100) gemäß einem der Ansprüche 1 bis 3, wobei der Steuerungsbereich (3) zumindest teilweise mittels erhabener Pits aufgezeichnet ist.

5. Informationsaufzeichnungsmedium (100) gemäß Anspruch 4, wobei die erhabenen Pits in einem Anfangszustand mit einem pigmentierten Film bedeckt sind, so dass die erhabenen Pits gelesen werden können, indem ein Aufzeichnungsvorgang mittels DC-Schreiben durchgeführt wird.

6. Informationsaufzeichnungsmedium (100) gemäß einem der Ansprüche 1 bis 5, wobei ein Teil der Werbeanzeigeninformation in dem Werbeanzeigenbereich (2) aufgezeichnet ist und ein anderer Teil der Werbeanzeigeninformation bezüglich des Informationsaufzeichnungsmediums (100) von Außen bereitgestellt wird.

7. Informationsaufzeichnungsmedium (100) gemäß einem der Ansprüche 1 bis 6, wobei die Werbeanzeigeninformation gelöscht werden kann.

8. Ein Werbeanzeigeninformation-Bereitstellungssystem (200), **dadurch gekennzeichnet, dass** das Werbeanzeigeninformation-Bereitstellungssystem (200) aufweist: eine Client-Vorrichtung (20), welche in der Lage ist, eine Wiedergabe eines Informationsaufzeichnungsmediums (100) gemäß Anspruch 1 auszuführen; und eine Server-Vorrichtung (27) zum Bereitstellen einer Werbeanzeigeninformation, wobei die Client-Vorrichtung (20) aufweist:
eine Wiedergabevorrichtung (25), welche in der Lage ist, die bereitgestellte Werbeanzeigeninformation wiederzugeben; und
eine Aufzeichnungsvorrichtung (26) zum Aufzeichnen der Dateninformation auf Basis der Steuerungsinformation,
wobei mindestens die Client-Vorrichtung und/oder die Server-Vorrichtung aufweist: eine Beurteilungsvorrichtung (29) zum Beurteilen, ob die bereitgestellte Werbeanzeigeninformation von der Wiedergabevorrichtung (25) wiedergegeben ist; und eine Steuerungsvorrichtung (30), welche in der Lage ist, die Steuerungsinformation zu lesen, wenn beurteilt wird, dass die Werbeanzeigeninformation wiedergegeben ist.

9. Werbeanzeigeninformation-Bereitstellungssystem (200) gemäß Anspruch 8,
wobei das Informationsaufzeichnungsmedium (100) den Werbeanzeigenbereich (2) aufweist, in welchem mindestens die Identifikationsinformation aus einem Teil der Werbeanzeigeninformation und der Identifikationsinformation, welche die Werbeanzeigeninformation identifiziert, aufgezeichnet ist, und
die Server-Vorrichtung (29) eine Speicher-Vorrichtung (32) zum im Voraus Speichern der Werbeanzeigeninformation und eine Identifikationsinformation-Bereitstellungsvorrichtung (31) zum Bereitstellen der der aufgezeichneten Identifikationsinformation entsprechenden Werbeanzeigeninformation aus der gespeicherten Werbeanzeigeninformation aufweist.

10. Informationsaufzeichnungsmedium (100) gemäß einem der Ansprüche 1 bis 7, wobei
die Steuerungsinformation einen Hochgeschwindigkeits-Parameter aufweist, welcher eine Aufzeichnungsgeschwindigkeit der Aufzeichnung der Dateninformation in einer hohen Geschwindigkeit angibt, und
der Hochgeschwindigkeits-Parameter bezüglich des Informationsaufzeichnungsmediums (100) von Außen bereitgestellt wird und in dem Steuerungsbereich (3) aufgezeichnet wird.

11. Werbeanzeigeninformation-Bereitstellungssystem (200) gemäß Anspruch 8 oder 9, wobei
die Steuerungsinformation einen Hochgeschwindigkeits-Parameter aufweist, welcher eine Aufzeichnungsgeschwindigkeit der Aufzeichnung der Dateninformation in einer hohen Geschwindigkeit angibt,
wobei die Server-Vorrichtung (27) ferner eine Parameter-Bereitstelungsvorrichtung (28) aufweist zum Bereitstellen des Hochgeschwindigkeits-Parameters, wenn beurteilt wird, dass die Werbeanzeigeninformation wiedergegeben ist,
wobei die Client-Vorrichtung (20) ferner eine Update/Aufzeichnungsvorrichtung (26) aufweist zum Updaten und Aufzeichnen der Steuerungsinformation, so dass der bereitgestellte Hochgeschwindigkeits-Parameter in der Steuerungsinformation enthalten ist, und
mindestens die Client-Vorrichtung (20) und/oder die Server-Vorrichtung (27) die upgedatete und aufgezeichnete Steuerungsinformation für die Steuerungsvorrichtung (30) lesbar macht.

## Revendications

1. Support d'enregistrement d'informations (100) comprenant :
une zone qui peut être enregistrée (1) dans laquelle sont enregistrées des informations de données ; et
une zone de publicité (2) dans laquelle sont enregistrées au moins des informations de publicité et / ou des informations d'identification qui identifient les informations de publicité ;
**caractérisé en ce que** ledit support d'enregistrement d'informations (100) comprend :
une zone de commande (3) dans laquelle sont enregistrées des informations de contrôle, les informations de contrôle étant nécessaires pour enregistrer les informations de données dans la zone qui peut être enregistrée (1) à une vitesse plus élevée qu'une vitesse d'enregistrement prédéterminée ;
dans lequel les informations de contrôle sont enregistrées dans ladite zone de commande (3) de telle sorte que les informations de contrôle ne puissent pas être lues dans un état initial et que les informations de contrôle puissent être lues par une application en exécutant un procédé prédéterminé sur ladite zone de commande (3) lorsque les informations de publicité sont reproduites.

2. Support d'enregistrement d'informations (100) selon la revendication 1, dans lequel des informations de drapeau qui indiquent si les informations de publicité sont reproduites ou pas, sont chiffrées et enregistrées dans l'une au moins de la zone qui peut être enregistrée (1), de la zone de publicité (2) et de la zone de commande (3).

3. Support d'enregistrement d'informations (100) selon la revendication 1 ou la revendication 2, dans lequel l'une au moins de la zone qui peut être enregistrée (1), de ladite zone de publicité (2) et de ladite zone de commande (3), est construite de telle sorte qu'il soit possible d'ajouter un logo qui peut être reconnu de manière visuelle à partir d'un côté au moins dudit support d'enregistrement d'informations (100), si lesdites informations de publicité sont reproduites.

4. Support d'enregistrement d'informations (100) selon l'une quelconque des revendications 1 à 3, dans lequel ladite zone de commande (3) est enregistrée à l'aide d'alvéoles embossées au moins en partie.

5. Support d'enregistrement d'informations (100) selon la revendication 4, dans lequel les alvéoles embossées sont couvertes avec un film pigmenté dans un état initial de telle sorte que les alvéoles embossées puissent être lues en exécutant un procédé d'enregistrement par une écriture DC.

6. Support d'enregistrement d'informations (100) selon l'une quelconque des revendications 1 à 5, dans lequel une partie des informations de publicité est enregistrée dans ladite zone de publicité (2), et une autre partie des informations de publicité est remise à partir de l'extérieur dudit support d'enregistrement d'informations (100).

7. Support d'enregistrement d'informations (100) selon l'une quelconque des revendications 1 à 6, dans lequel les informations de publicité peuvent être effacées.

8. Système de remise d'informations de publicité (200), **caractérisé en ce que** ledit système de remise d'informations de publicité (200) comprend : un appareil client (20) capable d'exécuter une reproduction sur un support d'enregistrement d'informations (100) selon la revendication 1 ; et un appareil serveur (27) destiné à fournir les informations de publicité ;
ledit appareil client (20) comprenant : un dispositif de reproduction (25) capable de reproduire les informations de publicité remises ; et un dispositif d'enregistrement (26) destiné à enregistrer des informations de données sur la base des informations de contrôle ;
l'un au moins dudit appareil client (20) et dudit appareil serveur (27) comprenant : un dispositif de jugement (29) destiné à juger si les informations de publicité remises sont reproduites par ledit dispositif de reproduction (25) ; et un dispositif de commande (30) capable de lire les informations de contrôle si on juge que les informations de publicité sont reproduites.

9. Système de remise d'informations de publicité (200) selon la revendication 8, dans lequel :
ledit support d'enregistrement d'informations (100) comprend ladite zone de publicité (2) dans laquelle sont enregistrées au moins les informations d'identification hors d'une partie des informations de publicité et des informations d'identification qui identifient les informations de publicité ; et
ledit appareil serveur (27) comprend un dispositif de stockage (32) destiné à stocker à l'avance les informations de publicité et un dispositif de remise d'informations d'identification (31) destiné à remettre les informations de publicité qui correspondent aux informations d'identification enregistrées hors des informations de publicité stockées.

10. Support d'enregistrement d'informations (100) selon l'une quelconque des revendications 1 à 7, dans lequel :
les informations de contrôle comprennent un paramètre de vitesse élevée qui indique une vitesse lors d'un enregistrement d'informations de données à une vitesse élevée ; et
le paramètre de vitesse élevée est remis à partir de l'extérieur du support d'enregistrement d'informations (100) et est enregistré dans la zone de commande (3).

11. Système de remise d'informations de publicité (200) selon la revendication 8 ou la revendication 9, dans lequel :
les informations de contrôle comprennent un paramètre de vitesse élevée qui indique une vitesse lors d'un enregistrement d'informations de données à une vitesse élevée ;
ledit appareil serveur (27) comprend en outre un dispositif de remise de paramètre (28) destiné à remettre le paramètre de vitesse élevée si on juge que les informations de publicité sont reproduites ;
ledit appareil client (20) comprend en outre un dispositif de mise à jour / d'enregistrement (26) destiné à mettre à jour et à enregistrer les informations de contrôle de telle sorte que le paramètre de vitesse élevée remis soit inclus dans les informations de contrôle ; et
l'un au moins dudit appareil client (20) et dudit appareil serveur (27) fait que ledit dispositif de commande (30) peut lire les informations de contrôle mises à jour et enregistrées.
